# EUROPEAN PATENT SPECIFICATION

(11) **EP 0 747 301 B1**
(45) Date of publication and mention of the grant of the patent: **08.08.2001**
(21) Application number: 96201614.3
(22) Date of filing: 10.06.1996
(51) Int. Cl.: B65D 83/14

(54) **Aerosol can containing a food product with a special aerosol**
Aerosolbehälter enthaltend ein Nahrungsmittel mit einem speziellen Aerosol
Récipient aérosol contenant un produit alimentaire avec un aérosol spécial

(30) Priority: 09.06.1995 NL 1000541
(43) Date of publication of application: 11.12.1996
(60) Divisional application: 01202008.7
(73) Proprietor: Friesland Brands B.V., 8937 AC Leeuwarden (NL)
(72) Inventor: Vanrusselt, Marleen Hubertine Paola, 3290 Diest (BE)
(74) Representative: Smulders, Theodorus A.H.J., Ir.

(56) References cited:
- EP-A- 0 202 053
- EP-A- 0 257 336
- EP-A- 0 454 195
- DE-A- 2 517 988
- FR-A- 2 516 483
- US-A- 3 622 354
- SCIARRA/STOLLER: "THE SCIENCE AND TECHNOLOGY OF AEROSOL PACKAGING", 1974, JOHN WILEY & SONS, NEW YORK, LONDON, SYDNEY, TORONTO
- HERZKA/PICKTHALL: "PRESSURIZED PACKAGING (AEROSOLS)", 1961, BUTTERWORTHS, LONDON

## Description

This invention relates to packed, viscous, gel-like and paste-like foods which usually have a long storage life, even when part of the contents has been taken from the packing. The non-used part of the packed product is not contaminated with microorganisms that may cause decay. Besides, the invention may also be used for products having a limited storage life.

It is generally known that the storage life of viscous and paste-like foods can be considerably prolonged when these foods are packed in heated, pasteurized and preferably sterilized conditions. Conventional packing materials comprise glass and, optionally plastic-coated, aluminium, tinplate, paper and cardboard packings. However, a problem arises when the packings are opened. From the outside microbial infection occurs which rapidly deteriorates the keeping qualities of the product.

It is further generally known that the use of aerosol cans has great advantages of use. Products packed in aerosol cans can be properly dosed. Moreover, the product is ready for use. The user can exactly take the amount of product he needs. The remaining contents of the aerosol can remains available for a next use.

In the light of the present invention it is important that products packed in aerosol cans have a longer storage life and are hygienically packed. An aerosol can is properly shut off from the outside air. In addition, the contents of an aerosol can are maintained under excess pressure with respect to the environment. This guarantees that no infection of the packed product from the outside can occur.

By the term "aerosol can" is meant in this specification and in the claims any packing comprising a product and at least a propellant having an initial pressure of at least 5 atmospheres and preferably 8 atmospheres, provided with a valve and containing a product which can be controllably dosed from the packing by means of co-packed energy when the valve is opened. The co-packed energy is formed by a gaseous propellant.

Many attempts have already been made to market foods in aerosol cans. At the moment, however, whipped cream (including artificial toppings resembling whipped cream) is the only really successful product in an aerosol can. In all cases of commercial use, the energy co-packed in aerosol cans for whipped cream is laughing gas (N₂O) as propellant. This gas is largely present in the whipped cream phase in dissolved form and merges into the gaseous form when put in the cream in the outside atmosphere, thus giving the whipped cream the desired foamy structure. Besides, a minor part of the laughing gas is present in gaseous condition in the head space of the aerosol can.

Propellants soluble in the liquid products, such as laughing gas and carbon dioxide, are not suitable for use in products which in use should be viscous, gel-like or paste-like, or which may only have a relatively low overrun. They give too high an overrun. The term "overrun", which is also referred to as "dispensing percentage", indicates the volume increase of a, viscous or non-viscous, liquid under the influence of a gaseous phase present in that liquid.

It is technically possible to pack more viscous products, such as mayonnaise, ketchup, mustard, pâté and cheese pastes, in aerosol cans. The aerosol cans to be used here are usually of the type in which the co-packed energy is supplied by a mechanical system, such as a spring system. Because of the absence of propellants the packed product is released in the form as present in the container. If it is contemplated to give the product a somewhat light appearance, there may optionally be used a combined system which in addition to the mechanical mechanism contains an amount of propellant. However, the greatest problem of these mechanical and combined systems is the cost price. In fact, the advantages of such aerosol cans do not outweigh the high price.

Moreover, aerosol cans are known in which the propellant is contained in a separate compartment. This gas gives the energy required to expel the packed product without being in contact with this product, which is essential to the present invention. The separate compartments, which are separated from each other by, e.g., a piston, a flexible partition wall - or even embodiments in which the gas is put in a separate container - require a technological adaptation of the aerosol cans, which is not necessary according to the present invention.

EP-A-0 257 336 describes foamable skin creams, the object being to improve the foaming characteristics. In such foams two aspects play an important part, namely foaming and foam stability. These aspects may be influenced chiefly by including specific additives, in particular specific surfactants, in the recipe of the agent to be foamed. This is clearly apparent from the above European patent application, which proposes a very special cream composition. The illustrated compositions contain non-ionic, anionic and/or cationic surfactants in high contents. Apart from the fact that these agents are generally not "food grade", the amounts required for foods are often unacceptably high. Furthermore, foods are usually subjected during their processing to a high-temperature treatment, such as pasteurization or sterilization, to which many surfactants are not resistant. Finally, reference is made to the fact that many surfactants influence the flavour and/or aroma of a product, which is unacceptable for use in foods.

Besides the very special requirements for the composition, the above publication indicates that additional modifications of foaming characteristics can be realized by adapting the composition of the propellant. For this purpose a number of gas mixtures is given by way of illustration, namely laughing gas/carbon dioxide, laughing gas/fluorohydrocarbon and laughing gas/nitrogen.

It has now been found that when viscous, gel-like or paste-like foods, in general foods having a viscosity of at least 20 mPa.s, and preferably of at least 40 mPa.s (measured at a shearing rate of less than 400 s⁻¹, 20°C, Dynamic Stress Rheometer (Rheometrics® )), are packed in an aerosol can, these foods can be dosed therefrom by using a propellant which is substantially insoluble in the food, without the propellant capacity decreasing so rapidly that the aerosol can cannot be emptied completely. It is assumed that the viscosity of the food plays a part in this respect.

According to the invention it has therefore become possible to pack viscous, gel-like or paste-like foods in an aerosol can, from which the product can be dosed in the form in which it is present in the packing or at a relatively low overrun. Moreover, the embodiment according to the invention is relatively inexpensive as compared with known aerosol can systems.

The invention relates to a viscous, gel-like or paste-like food having a viscosity of at least 20 mPa.s, and preferably of at least 40 mPa.s (measured at a shearing rate of less than 400 s⁻¹, 20°C, Dynamic Stress Rheometer (Rheometrics® )) packed in an aerosol can having an initial pressure of 8-18 atmospheres, the propellant being formed as to at least 15 percent by weight, preferably at least 40 percent by weight, based on the total propellant, by a gas acceptable from the viewpoint of food technology, which substantially does not dissolve in the food.

In fact, any gas that gives no undesirable side effects when taken up in the body and is compatible with the food with which it is in contact in the aerosol can for a long period of time, and which does not, if at all, dissolve in that food, can be used as propellant. Thus gases such as argon and helium can be used in principle, but in many cases the cost price of these gases will render their use unattractive. There may also be used hydrogen gas, but this gas may cause fire and explosion risks, especially in the filling process.

Preferably, the gas acceptable from the viewpoint of food technology is nitrogen gas. Furthermore, compressed air consisting as to 80% of nitrogen gas may be used. In this connection it should be noted that air contains about 20% oxygen gas, which gas may give rise to undesirable oxidation reactions with constituents in the product packed in the can.

In a special preferred embodiment the propellant consists completely of nitrogen. This gas is attractive both because of its cost price and because of the fact that it prevents undesirable oxidation reactions.

Besides, it is known from European patent application 0 202 053 that nitrogen gas may be included in the head space of vessels filled with carbonated beverages, but in particular beer. With this gas it is contemplated to prevent too much carbon dioxide dissolved in the beverage from escaping from that beverage when an amount of beverage has been withdrawn from the vessel. Such an escape of carbon dioxide leads to quality deficiencies.

French patent application 2 516 483 relates to a container containing beverages susceptible to oxidation, in particular wine. In order to prevent oxidation, an amount of "neutral gas" (read: nitrogen gas) is applied above the wine.

Apart from the other purposes for which nitrogen gas is used in the above-discussed publications, the beverages to which these publications are directed have a viscosity of less than 5 mPa.s, while the containers of those beverages cannot be designated as aerosol cans and, furthermore, have an initial pressure of (considerably) less than 5 atmospheres.

The aerosol cans according to the invention do not work on the basis of a mechanical system, which considerably reduces the cost of production. In particular, when sterile air or nitrogen gas is used as propellant, there is formed a relatively inexpensive packing system, at least as compared with known aerosol can packings.

Contrary to the use of propellants, such as laughing gas, carbon dioxide and other gases soluble in the packed medium, the packed medium is not dosed from the aerosol can as an excessively foamed product. In principle, the packed food leaves the aerosol can in form in which it is present in the aerosol can. Depending on the food present in the aerosol can, however, a light foaming may occur. In particular the use of nitrogen with liquid foods gives a somewhat foamy surface. As a result of turbulency, geometry of the valve, and depending on the degree of pressing the dosing button, a desired foam is formed. Shaking has the result that the gaseous phase and the liquid phase are mixed even more intensively. The foam obtained by catching nitrogen gas is very stable in environmental conditions and may give the product to be dosed an attractive appearance.

By combining the gas which substantially does not dissolve in the food with a gas acceptable from the viewpoint of food technology which does dissolve in the food to a considerable degree, such as laughing gas or carbon dioxide, the invention provides foods of which the desired foaming characteristics can be adjusted. Through the presence of, anyhow, 15 percent by weight, based on the total weight of the propellant, of a gas which does not, if at all, dissolve, the overrun will not exceed 500%. After dosing the foods according to the invention, these foods preferably have an overrun of less than 300% and preferably between 0 and 100%.

The control of the foaming characteristics and thus the overrun is mainly given by the gas composition.

Thus the invention also provides foods packed in aerosol cans with - depending on the desired foaming characteristic - 15-100%, preferably 45-100%, and most preferably 80-100%, of a gas which is not or hardly soluble, preferably nitrogen gas, and 85-0%, preferably 55-0%, and most preferably 20-0%, of a properly soluble gas, which properly soluble gas is preferably laughing gas.

The aerosol cans used according to the invention have an initial pressure - i.e. a pressure in the packing not opened - of preferably 8-12 atmospheres. Besides, the maximum pressure for conventional aerosol cans is about 18 atmospheres. In fact, the initial pressure is adjusted on the basis of experiments in which it is examined how much gas is required to completely empty the aerosol can under normal conditions of use.

The amount of gas which can be used in total in an aerosol can mainly depends on the nature of the material from which the container is made, but is chiefly determined by legal regulations. In addition, the amount of gas depends on the holding capacity of the aerosol can and the degree of filling, which is known to those skilled in the art. When nitrogen gas forms the propellant of the aerosol can system, a minimum pressure of about 8 bar is initially necessary to obtain an aerosol can system giving an acceptable performance. In general, dpending on the volume of the aerosol can, 1-20 g nitrogen gas is put in an aerosol can. Usually, aerosol cans having a holding capacity of 405 ml according to the invention contain 250 ml product and 2.1 g nitrogen gas and 1000 ml cans 750 ml product and 4.1 g nitrogen gas.

Optionally, there may be present in the container of the aerosol can a separate cylinder filled with the gas to be used. These cylinders which release so much propellant that the pressure in the aerosol can substantially remains constant are described in, e.g., European patent applications 0 349 053 and 0 446 973. Commercially available cylinders are, e.g., P.G.® cylinders.

The nature of the packed food is, apart from a minimum viscosity, not critical, as long as this food is only slightly liquid or viscous. Suitable aerosol can systems according to the invention contain foods having a viscosity of at least 20 mPa.s, preferably at least 40 mPa.s. The maximum viscosity is limited by the possibilities of the aerosol can. Examples of products in which the advantages of the aerosol can packing according to the invention show up very well are sweet sauces such as vanilla sauces (e.g. "sauce anglaise"), chocolate sauces, caramel sauce; desserts, such as light mousses, sabayons, and pudding; savoury sauces, such as different dressings, ketchup, mustard, and pepper sauce; and cream, in particular common cream. When coffee cream is packed in the aerosol can according to the invention, in which nitrogen gas is the only propellant, a foamy milk can be dosed on, e.g., coffee, thus giving the coffee a cappuccino-like appearance.

Depending on the viscosity and the form stability of the packed product, the valve of the aerosol can may be combined with a specific nozzle. The more viscous the packed food, the larger the nozzle opening must be.

The container of the aerosol can to be used according to the invention may be made of all known materials disclosed for the purpose by the state of the art, as long as these materials do not adversely affect the properties of the food. In particular, containers of tinplate and aluminium, which may be coated on the inner side with an inert coating of lacquer, are very suitable. However, aerosol cans of glass or plastic may be used as well, as long as it can be guaranteed that they can resist the required minimum initial pressure.

Before the aerosol cans are carried to the filling plant, the aerosol cans are thoroughly cleaned with water and disinfected with hydrogen peroxide. The hydrogen peroxide is removed afterwards by heating. From this phase the aerosol cans remain in a low-germ environment, a so-called "salle blanche". In this sterile chamber an excess pressure of sterile air prevails, with the result that any form of infection is prevented. The aerosol cans are filled with product and provided with a valve which is forced on the aerosol can. Subsequently, they arrive in a specifically adjusted gassing plant in which the propellant is injected into the aerosol can under pressure (optionally while shaking). Through the pressure of the gas in the aerosol can the product is shut off from the outside air. The gas applied is preferably nitrogen gas, optionally in combination with dinitrogen oxide. After gassing the aerosol cans leave the sterile chamber and are tested for sufficient gas pressure. Finally, the aerosol cans are provided with a nozzle and a cover to close the whole hygienically.

The present invention will now be explained in more detail with reference to the following examples.

### Example 1

From 50 parts by weight of cream having a fat content of 40%, 48 parts by weight of low-fat milk and 2 parts by weight of emulsifier and stabilizer a common cream is prepared. In particular, the milk and the cream are pasteurized for 20 seconds at 80°C and then cooled to room temperature. The emulsifier/stabilizer mixture is added, after which the composition is sterilized for 4 seconds at 137°C (Steritherm/Sterideal). Then the mixture is cooled to a temperature below 10°C and a 405 ml aluminium aerosol can container is filled with 250 g product. .

Subsequently, the aerosol can is provided with a valve, and 2.1 g nitrogen gas is put in the aluminium container in sterile condition. A conventional push knob/nozzle combination is placed on the valve.

When the valve is pressed in, a liquid cream having a foamy surface is dosed from the aerosol can. The foam is very stable and has not yet collapsed after half an hour.

### Example 2

From whole milk (80 parts by weight), sugar (12 parts by weight), cream (4 parts by weight), egg yolk (2 parts by weight), and conventional colourants, aromatic substances, stabilizers and emulsifiers (2 parts by weight) a vanilla sauce is prepared in the conventional manner. In particular, the milk is pasteurized for 10 seconds at 72°C. To half of the milk are added the other ingredients, apart from the cream. The remaining part of the milk and the cream are added, and the whole is pasteurized on a plate pasteurizer for 22 seconds at 79°C. Then the sauce is homogenized (200/20 bar) and cooled to 6°C. Before filling a 405 ml aluminium aerosol can container according to Example 1, the product is heated on a plate UHT heat exchanger (4 sec.; 137°C).

The resulting vanilla sauce has a viscosity of 350 mPa.s (10°C).

1.8 g nitrogen gas and 0.6 g dinitrogen oxide are added. By opening the valve a slightly foamy vanilla sauce is dosed.

## Claims

1. A viscous, gel-like or paste-like food having a viscosity of at least 20 mPa.s at a shearing rate of less than 400 s⁻¹, packed in an aerosol can having an initial pressure of 8-18 atmospheres, the propellant being formed as to at least 15 percent by weight, based on the total propellant, by a gas acceptable from the viewpoint of food technology, which substantially does not dissolve in the food.

2. A packed food according to claim 1, wherein the gas acceptable from the viewpoint of food technology is nitrogen gas.

3. A packed food according to claim 2, wherein the propellant completely consists of nitrogen.

4. A packed food according to claim 1 or 2, wherein the propellant further consists of a gas acceptable from the viewpoint of food technology, which substantially dissolves in the food.

5. A packed food according to claim 4, wherein the gas acceptable from the viewpoint of food technology is laughing gas.

## Patentansprüche

1. Viskoses, gelartiges oder pastenartiges Nahrungsmittel mit einer Viskosität von mindestens 20 mPa s bei einer Scherrate von weniger als 400 s⁻¹, verpackt in einer Aerosoldose, mit einem Anfangsdruck von 8 - 18 Atmosphären, wobei das Treibmittel zu einem Anteil von mindestens 15 Gewichtsprozent, bezogen auf das gesamte Treibmittel, aus einem Gas gebildet ist, das vom nahrungsmitteltechnischen Standpunkt aus akzeptabel ist und sich im wesentlichen nicht im Nahrungsmittel auflöst.

2. Verpacktes Nahrungsmittel nach Anspruch 1, bei dem das vom nahrungsmitteltechnischen Standpunkt aus akzeptable Gas ein Stickstoffgas ist.

3. Verpacktes Nahrungsmittel nach Anspruch 2, bei dem es sich bei dem Treibmittel ausschließlich um Stickstoff handelt.

4. Verpacktes Nahrungsmittel nach Anspruch 1 oder 2, bei dem das Treibmittel ferner ein vom nahrungsmitteltechnischen Standpunkt aus akzeptables Gas ist, das sich im wesentlichen im Nahrungsmittel auflöst.

5. Verpacktes Nahrungsmittel nach Anspruch 4, bei dem das vom nahrungsmitteltechnischen Standpunkt aus akzeptable Gas Lachgas ist.

## Revendications

1. Aliment visqueux, analogue à un gel ou analogue à une pâte ayant une viscosité d'au moins 20 mPa.s à une vitesse de cisaillement inférieure à 400 s⁻¹, conditionné dans une boîte pour aérosols ayant une pression initiale de 8-18 atmosphères, le propulseur étant formé à raison d'au moints 15% en masse, par rapport au propulseur total, par un gaz acceptable du point de vue de la technologie alimentaire, qui ne se dissout sensiblement pas dans l'aliment.

2. Aliment conditionné selon la revendication 1, où le gaz acceptable du point de vue de la technologie alimentaire est du gaz azote.

3. Aliment conditionné selon la revendication 2, où le propulseur consiste totalement en azote.

4. Aliment conditionné selon la revendication 1 ou 2, où le propulseur consiste en outre en un gaz acceptable du point de vue de la technologie alimentaire qui se dissout sensiblement dans l'aliment.

5. Aliment conditionné selon la revendication 4, où le gaz acceptable du point de vue de la technologie alimentaire est du gaz hilarant.
